# EUROPEAN PATENT SPECIFICATION

(11) **EP 1 586 758 B1**
(45) Date of publication and mention of the grant of the patent: **24.03.2010**
(21) Application number: 05397010.9
(22) Date of filing: 04.04.2005
(51) Int. Cl.: F02D 19/10, F02B 7/08

(54) **A method of operating a gas engine**
Verfahren zum Betrieb eines Gasmotors
Procédé de fonctionnement d'un moteur à gaz

(30) Priority: 16.04.2004 FI 20045137
(43) Date of publication of application: 19.10.2005
(73) Proprietor: Wärtsilä Finland Oy, 65380 Vaasa (FI)
(72) Inventor: SAIKKONEN, Ari, 65200, VAASA (FI)
(74) Representative: Finnilä, Kim Larseman

(56) References cited:
- DE-A1- 19 802 643
- JP-A- 2003 148 188
- JP-A- 2004 197 625
- US-A- 5 887 566

## Description

The invention relates to a method of operating a gas engine as set forth in the preamble of claim 1.

Safe and reliable use of a gas engine, which here means a piston engine running on gaseous fuel, as a marine engine sets special requirements for the fuel feed system, the most important of which is that unexpected shut down of the engine can not be allowed under any circumstances. Because of this, a gas engine as a marine engine comprises a backup system in the fuel feed system. Typically, the gaseous fuel used as main fuel in the gas engine is fed into the combustion chamber of the engine mixed with air. It is ignited by injecting a very small amount of ignition fuel, which is ignited due to the existing conditions and thereby also ignites the gaseous fuel. In this case, as far as the gaseous fuel is concerned, the engine is run according to the otto process. In case there is a malfunction in the above-mentioned operation affecting the running of the engine, the engine can be provided with a backup fuel feed systems based on using only liquid fuel. In this case there is a transfer from running on gas to running on liquid fuel and the engine is run according to the diesel process.

The backup use of liquid fuel is, however, problematic in the sense that typically these systems are hydromechanically controlled, because there is tendency to maximise the operation reliability, but with a hydromechanic system it is impossible to control the combustion process so that it would be the cleanest possible, but the combustion products include, for example, uncombusted hydrocarbons and nitrogen oxides in clearly larger amounts than in normal gas operation. Further, with backup operation the whole power is produced by using liquid fuel, whereby the fuel consumption is multifold compared to the consumption of liquid fuel as ignition fuel in gas operation. The tanks for the liquid fuel will have to dimensioned taking the space requirement of the vessel into consideration, which affects the load capacity of the vessel. Thus, the having an insufficient amount of fuel in reserve fuel operation can cause a risk.

JP 2003148188 A discloses pilot fuel feed system, where two fuel oil feeding branches are provided making use of the same injector but supplying different fuels so that the pilot oil to be utilised for starting the engine is added with an ignition accelerator so as to secure the start of the engine.
The object of the invention is to produce a method by means of which the problems relating to the prior art can be minimised. An especial object of the invention is to produce a method by means of which, among others, the operation reliability of the gas engine can guaranteed in all situations and at the same time minimise the risk of running out of liquid fuel and to produce a method by means of which the exhaust emissions can be reduced even in backup operation conditions of the gas engine.
The objects of the invention are mainly achieved with a method as disclosed in the appended claim 1 and as more closely explained in other claims.
A method according to the invention relates to operating a gas engine, the gas engine comprising a first fuel feed system, a second fuel feed system and a third fuel feed system, the use of which can be alternated for running the engine in various operation modes. In a method according to the invention, in the first operation mode of the engine the engine is run by introducing gaseous fuel into the combustion air of the engine via the first fuel feed system, whereby the gaseous fuel is ignited by injecting an ignition fuel into the mixture of combustion air and gaseous fuel via the second fuel feed system. A characterizing feature of the invention is that the engine can be run in the second operation mode, in which the engine is run by still introducing gaseous fuel into the combustion air of the engine and the gaseous fuel is ignited by injecting ignition fuel into the mixture of combustion air and gaseous fuel via the third fuel feed system.
According to the invention, the second operation mode may be used at least in situations where there is a malfunction in the second fuel feed system. In order to detect the malfunction measurement values about the operation data are collected into the control system of the engine, in which the measurement values are compared to pre-set values an in case the variation of the measurement values and the pre-set values exceed a pre-set level, the system is transferred into the second operation mode. Preferably, at least the fuel pressure of the second fuel feed system is used as an operation data. In the second fuel feed system the fuel is dosed from a common rail using an electrical control arranged in connection with each injector nozzle. Contrary to this, in the third fuel feed system the fuel is dosed by hydro-mechanical control by means of an injection pump arranged in connection with each injector nozzle.

In the second operation mode the third fuel feed system is controlled so that its injection amount is less than 20 % of the total fuel amount to be injected in this operation mode and the second fuel feed system is closed. In this case, however, it is possible the maximum output of the engine must in practice be lowered to about 80 % of the output available in the first operation mode because in the second operation mode knock detection is not necessarily reliable. In the second operation mode the output of the engine is regulated mainly by regulating the amount of first fuel.

The invention provides clear advantages in relation to known technology. By using the method according to the invention a gas engine can be used in case there is a malfunction of the ignition fuel feed system so that the exhaust gas emissions are clearly lower than those compared to reserve fuel use according to the known technology. Further, use of the method according to the invention allows considerably increasing the range of liquid reserve fuel in comparison to backup fuel operation according to known technology.

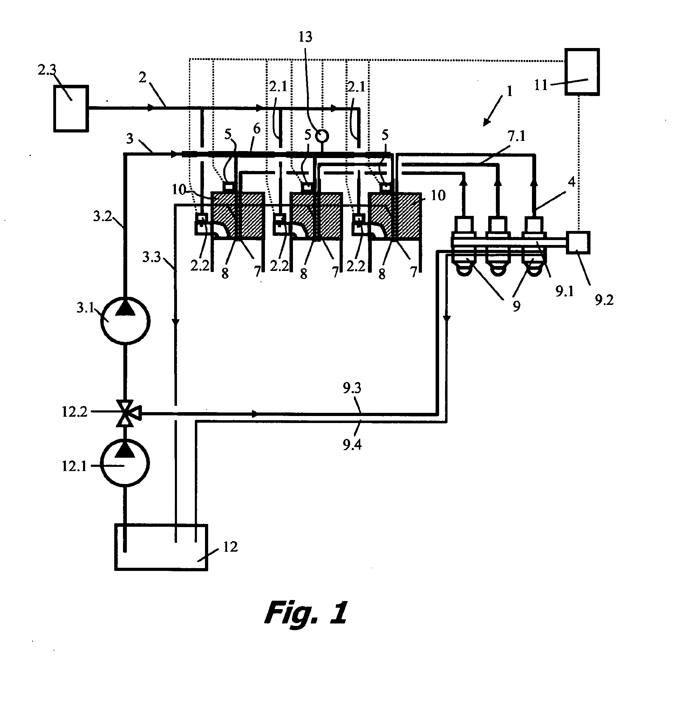

In the following, the invention is explained in an exemplary way, with reference to the appended schematic drawing, in which figure 1 is an illustration of an embodiment applying the method according to the invention.

Figure 1 schematically shows an injection system 1 for gas engine, the system provided for introducing fuel into the engine. The fuel feed system comprises a first fuel feed system 2 as the main fuel source, via which gaseous fuel can be introduced for the engine. In the text below, gaseous fuel can also be referred to as simply gas. The first fuel feed system comprises inlet piping 2.1 connecting the gas source 2.3 and the feed valves 2.2 of the engine. The gas can be dosed into the combustion air using the feed valves 2.2 via inlet piping 2.1. Here, the gas feed valves are arranged in connection with the feed channels of the engine combustion air. In order to control the gas feed valves 2.2 an engine control unit 11 has been arranged in connection with the engine, whereby during the operation of the engine the control unit 11 controls the opening and closing moments of the feed valves as well as the dosing of the gas feed according to, e.g. engine load. The first fuel feed system is here shown in a very schematic way and the parts not necessary for understanding the invention have not been shown.

The engine also comprises a second fuel feed system 3. The second fuel feed system is arranged to feed ignition fuel to the engine from the fuel tank 12 by means of a nozzle 8. The second fuel feed system 3 is the injection system for liquid fuel. It comprises a high-pressure pump 3.1 that increases the fuel pressure to a suitable level, feeding the fuel to the common rail 6 via fuel line 3.2 Excess fuel is returned to the fuel tank via line 3.3. The common rail6 is further connected to each fuel injector nozzle 8. The injector valves of the second fuel feed system are provided with an electrical control apparatus 5 by means of which the amount of fuel is dosed and the timing of the injection is accomplished. Each electrical control apparatus 5 is in connection to the engine control unit 11 which also controls the operation of the other fuel feed system 3.

When combusting gas the engine is run so that the gas is ignited with ignition fuel. Gas is introduced into the engine combustion air by means of the first fuel feed system 2 by opening and closing the gas feed valve 2.2. When the valve is open, gas flows into the combustion air and is subsequently ignited in the combustion chamber of the engine, when mixed with the air. Ignition is carried out by injecting a relatively small amount of ignition fuel by means of the second fuel feed system 3. Around the top dead center of the piston, in the final phases of the compression stroke, the conditions in the combustion chamber or a prechamber connected therewith (if used) are such as to ignite the ignition fuel, which also ignites the gas mixed with the combustion air. The amount of the ignition fuel is very small in relation to the amount of main fuel.

The gas engine is additionally provided with a third fuel feed system 4, acting as a backup system for the second fuel feed system 3. The third fuel feed system 4 comprises, in the solution illustrated in the figure, an injection pump 9 for each cylinder of the engine. Each injector pump 9 is connected to the injector nozzle 7 with its own fuel line 7.1. The control of the injector nozzles 7 of the third fuel feed system 4 is carried out hydromechanically. This means that each injector nozzle includes a spring-loaded nozzle needle (not shown) wherein the spring causes the force closing the nozzle needle. The nozzle needle is opened by the force of fuel pressure against the force of the spring. The amount of the fuel injection is in turn adjusted by means of the injection pump by rotating the piston of the injection pump into the desired position by moving the adjustment rod 9.1, the method being known as such. In order to control the operation of the injection pumps and to simultaneously control the operation of the third fuel feed system 4 an actuator 9.2 is arranged in connection therewith, by means of which the injection of the fuel can be adjusted. The actuator is connected to the engine control unit 11, into which the actuator 9.2 transmits its position data, the control unit also defining the operation of the actuator. The injection pumps 9 are in connection with the fuel tank 12 via the feed line 9.3 and the return line 9.4.

In the embodiment of figure 1 the fuel of both the second and third fuel feed systems 3, 4 is in a common tank 12. The fuel is transferred forward by means of a transfer pump 12.1, subsequent to which the flow is divided into the feed lines 3.2, 9.3 of the feed system by means of the valve 12.2. Each fuel feed system could just as comprise well their own separate fuel tanks, and this would be the case e.g. if different fuels were used in the second and third fuel feed systems.

The operation of the engine and the injection of the main fuel and ignition fuel are controlled by the control unit 11. Data concerning various operation data of the engine are also transferred into the control unit. For the invention it is especially essential that the values of the operation data of the second fuel feed system are compared to the pre-set values in the control unit 11. For this purpose at least a pressure measurement apparatus 13 has been arranged in connection with the second fuel system 3, from which the pressure measurement value is introduced into the engine control unit at certain intervals. This and possibly other measurement values are compared to the set values stored in the control unit and in case the difference between the measurement values and the pre-set values is larger than predetermined, the system is transferred into the second operation of the method according to the invention, the mode being described in the following.

In the second operation mode the engine is still operated by introducing gas into the engine combustion air via the first fuel feed system 2 as in the first operation mode. Now, however, the control system of the engine controls the actuator 9.2 of the third fuel feed system to start and maintain fuel injection via the injector nozzles 7 of the third fuel feed system. Simultaneously therewith or immediately thereafter the engine control unit 11 controls the electrical control 5 of the second fuel feed system to stop injecting fuel via its injector nozzles 8 into the engine combustion chamber.

Thus the operation of the engine can continue essentially without disturbances so that the gaseous fuel is ignited by injecting ignition fuel via the third fuel feed system 3 into the mixture of combustion air and gaseous fuel. In this second operation mode the third fuel feed system is run at a nearly constant amount of fuel, the amount typically being less than 20 % of the total amount of fuel. Thus, the output of the engine is adjusted by adjusting the amount of gas to be fed.

According to the invention, the feed capacity of the third fuel feed system is such as to allow an engine output approximately corresponding to the maximum output of the engine in gas operation. Because of this, the engine can still, when necessary, be used in the third operation mode, in which the fuel injection is carried out only via the third fuel feed system 4. Thus, the control unit 11 controls both the first and second fuel feed systems 2, 3 to stop feeding fuel and the output of the engine is adjusted only by adjusting the actuator 9.2 of the third fuel feed system.

The invention is not limited to the embodiments described here, but a number of modifications thereof can be conceived of within the scope of the appended claims.

## Claims

1. A method of operating a gas engine, the gas engine comprising,
- a first fuel feed system (2) for adding gaseous fuel to the combustion air,
- a second fuel feed system (3) for injecting ignition fuel into the mixture of gaseous fuel and combustion air, and
- a third fuel feed system (4) for injecting ignition fuel into the combustion chamber of the engine, the third fuel system (4) being configured to provide a backup fuel feed system based on using only liquid fuel,
in which method, in a first operation mode, gaseous fuel is introduced into the engine (1) combustion air via the first fuel feed system (2), and the gaseous fuel is ignited by injecting ignition fuel into the mixture of gaseous fuel and combustion air via the second fuel feed system (3), **characterized in that** in a second operation mode gaseous fuel is still introduced into the engine (1) combustion air via the first fuel feed system (2) and the gaseous fuel is ignited by injecting ignition fuel into the mixture of gaseous fuel and the combustion air via the third fuel feed system (4) whereby the third fuel feed system (4) is controlled to inject less than 20% of the total fuel amount supplied to the engine.

2. A method according to claim 1, **characterized in that** in the second fuel feed system (3) the fuel is dosed using an electrical control (5) arranged in connection with each injector nozzle (8) from a common rail (6) included in the system (3).

3. A method according to claim 1, **characterized in that** in the third fuel feed system (4) the fuel is dosed hydro-mechanically controlled by means of an injector pump (9) arranged in connection with each injector nozzle (7).

4. A method according to claim 1, **characterized in that** in the second operation mode the second fuel feed system (3) is closed,

5. A method according to claim 1, **characterized in that** in the second operation mode the engine output is adjusted by arranging the amount of the first fuel.

6. A method according to claim 1, **characterized in that** measurement values about the operation data of the second fuel feed system are collected into the control system of the engine, in which the measurement data are compared to pre-set values and in case the variation between the measurement values and the pre-set values exceeds a predetermined level, the system is transferred into the second operation mode.

7. A method according to claim 6. **characterized in that** at least fuel pressure is used as an operation data.

## Patentansprüche

1. Verfahren zum Betreiben eines Gasmotors, wobei der Gasmotor Folgendes umfasst
- eine erste Kraftstoff-Förderanlage (2) zum Zugeben von gasförmigem Kraftstoff zu der Verbrennungsluft,
- eine zweite Kraftstoff-Förderanlage (3) zum Einspritzen von Zündkraftstoff in das Gemisch von gasförmigem Kraftstoff und Verbrennungsluft und
- eine dritte Kraftstoff-Förderanlage (4) zum Einspritzen von Zündkraftstoff in die Verbrennungskammer des Motors, wobei die dritte Kraftstoff-Förderanlage (4) dafür konfiguriert ist, eine Reserve-Kraftstoff-Förderanlage auf der Grundlage der Verwendung nur von flüssigem Kraftstoff bereitzustellen,
wobei bei diesem Verfahren in einem ersten Betriebsmodus gasförmiger Kraftstoff über die erste Kraftstoff-Förderanlage (2) in die Verbrennungsluft des Motors (1) eingeleitet wird und der gasförmige Kraftstoff durch Einspritzen von Zündkraftstoff in das Gemisch von gasförmigem Kraftstoff und Verbrennungsluft über die zweite Kraftstoff-Förderanlage (3) gezündet wird, **dadurch gekennzeichnet, dass** in einem zweiten Betriebsmodus gasförmiger Kraftstoff nach wie vor über die erste Kraftstoff-Förderanlage (2) in die Verbrennungsluft des Motors (1) eingeleitet wird und der gasförmige Kraftstoff durch Einspritzen von Zündkraftstoff in das Gemisch von gasförmigem Kraftstoff und Verbrennungsluft über die dritte Kraftstoff-Förderanlage (4) gezündet wird, wobei die dritte Kraftstoff-Förderanlage (4) so gesteuert wird, dass sie weniger als 20 % der gesamten dem Motor zugeführten Kraftstoffmenge einspritzt.

2. Verfahren nach Anspruch 1, **dadurch gekennzeichnet, dass** in der zweiten Kraftstoff-Förderanlage (3) der Kraftstoff unter Verwendung einer elektrischen Steuerung (5) dosiert wird, die in Verbindung mit jeder Einspritzdüse (8) aus einer in der Anlage (3) eingeschlossenen gemeinsamen Druckleitung (6) angeordnet ist.

3. Verfahren nach Anspruch 1, **dadurch gekennzeichnet, dass** in der dritten Kraftstoff-Förderanlage (4) der Kraftstoff mit Hilfe einer Einspritzpumpe (9), die in Verbindung mit jeder Einspritzdüse (7) angeordnet ist, hydromechanisch gesteuert dosiert wird.

4. Verfahren nach Anspruch 1, **dadurch gekennzeichnet, dass** in dem zweiten Betriebsmodus die zweite Kraftstoff-Förderanlage (3) geschlossen ist.

5. Verfahren nach Anspruch 1, **dadurch gekennzeichnet, dass** in dem zweiten Betriebsmodus die Motorleistung durch Stellen der Menge des ersten Kraftstoffs eingestellt wird.

6. Verfahren nach Anspruch 1, **dadurch gekennzeichnet, dass** Messwerte über die Betriebsdaten der zweiten Kraftstoff-Förderanlage in der Steuerungsanlage des Motors gesammelt werden, wobei die Messdaten mit voreingestellten Werten verglichen werden und in dem Fall, dass die Abweichung zwischen den Messwerten und den voreingestellten Werten ein vorbestimmtes Niveau überschreitet, die Anlage in den zweiten Betriebsmodus überführt wird.

7. Verfahren nach Anspruch 6, **dadurch gekennzeichnet, dass** wenigstens der Kraftstoffdruck als Betriebsdaten verwendet wird.

## Revendications

1. Procédé d'exploitation d'un moteur à gaz, le moteur à gaz comprenant :
- un premier système d'alimentation en carburant (2) pour ajouter du carburant gazeux à l'air de combustion,
- un second système d'alimentation en carburant (3) pour injecter du carburant d'allumage dans le mélange de carburant gazeux et d'air de combustion, et
- un troisième système d'alimentation en carburant (4) pour injecter du carburant d'allumage dans la chambre de combustion du moteur, le troisième système d'alimentation en carburant (4) étant configuré afin de fournir un système d'alimentation en carburant de réserve basé sur l'utilisation seulement de carburant liquide,
procédé dans lequel, dans un premier mode de fonctionnement, du carburant gazeux est introduit dans l'air de combustion du moteur (1) via le premier système d'alimentation en carburant (2), et le carburant gazeux est allumé en injectant un carburant d'allumage dans le mélange de carburant gazeux et d'air de combustion via le second système d'alimentation en carburant (3), **caractérisé en ce que** dans un second mode de fonctionnement du carburant gazeux est encore introduit dans l'air de combustion du moteur (1) via le premier système d'alimentation en carburant (2) et le carburant gazeux est allumé en injectant du carburant d'allumage dans le mélange de carburant gazeux et d'air de combustion via le troisième système d'alimentation en carburant (4), moyennant quoi le troisième système d'alimentation en carburant (4) est commandé afin d'injecter moins de 20% de la quantité de carburant totale fournie au moteur.

2. Procédé selon la revendication 1, **caractérisé en ce que** dans le second système d'alimentation en carburant (3) le carburant est dosé en utilisant une commande électrique (5) disposée en raccordement avec chaque buse d'injecteur (8) à partir d'un rail commun (6) inclus dans le système (3).

3. Procédé selon la revendication 1, **caractérisé en ce que** dans le troisième système d'alimentation en carburant (4) le carburant est dosé d'une manière commandée hydro - mécaniquement au moyen d'une pompe d'injecteur (9) disposée en raccordement avec chaque buse d'injecteur (7).

4. Procédé selon la revendication 1, **caractérisé en ce que** dans le second mode de fonctionnement le second système d'alimentation en carburant (3) est fermé.

5. Procédé selon la revendication 1, **caractérisé en ce que** dans le second mode de fonctionnement la sortie du moteur est ajustée en agençant la quantité du premier carburant.

6. Procédé selon la revendication 1, **caractérisé en ce que** les valeurs de mesure relatives aux données d'exploitation du second système d'alimentation en carburant sont collectées dans le système de commande du moteur, dans lequel les données de mesure sont comparées avec des valeurs prédéterminées et au cas où la variation entre les valeurs de mesure et les valeurs prédéterminées excède un niveau prédéterminée, le système est transféré au second mode de fonctionnement.

7. Procédé selon la revendication 6, **caractérisé en ce que** au moins une pression de carburant est utilisée comme une donnée d'exploitation.
